# EUROPÄISCHE PATENTANMELDUNG

(11) **EP 1 762 543 A1**
(43) Veröffentlichungstag der Anmeldung: **14.03.2007**
(21) Anmeldenummer: 05019545.2
(22) Anmeldetag: 08.09.2005
(51) Int. Cl.: C01B 21/28, B01J 19/24

(54) **Prozessgaskühlvorrichtung**

(71) Anmelder: OSCHATZ GMBH, 45143 Essen (DE)
(72) Erfinder: Albrecht, Andreas, 45699 Herten (DE); Jacobs, Erich, 50259 Puhlheim/Sinthern (DE)
(74) Vertreter: Rohmann, Michael

(57) **Zusammenfassung**

Prozessgaskühlvorrichtung, wobei ein Kessel mit einem Mantel aus Kühlrohren vorgesehen ist und wobei am oberen Ende des Kessels eine Brennerhaube auf den Kessel aufgesetzt ist. Unterhalb der Brennerhaube ist eine Katalysatoreinrichtung angeordnet, die von einem Kühlbalkenaggregat abgestützt wird. Das Kühlbalkenaggregat ist lösbar mit dem Kessel verbunden.

## Beschreibung

Die Erfindung betrifft eine Prozessgaskühlvorrichtung, insbesondere zur Kühlung von Prozessgasen in Salpetersäureanlagen oder in Caprolactamanlagen, wobei ein Kessel mit einem Mantel aus Kühlrohren vorgesehen ist und wobei am oberen Ende des Kessels eine Brennerhaube auf den Kessel aufgesetzt ist. Die erfindungsgemäße Prozessgaskühlvorrichtung eignet sich vorzugsweise aber nicht ausschließlich für Prozessgase aus der Salpetersäureherstellung bzw. aus der Caprolactamherstellung.

Prozessgaskühlvorrichtungen der vorstehend beschriebenen Art sind aus der Praxis grundsätzlich bekannt. Bei aus der Praxis bekannten Vorrichtungen ist im oberen Mantelbereich des Kessels der Vorrichtung ein Kühlbalkenaggregat vorgesehen, das zur Abstützung einer unter der Brennerhaube angeordneten Katalysatoreinrichtung dient. Das Kühlbalkenaggregat ist bei den bekannten Vorrichtungen mit dem Kessel bzw. mit der Wand des Kessels fest verbunden und zwar in der Regel an den Kessel angeschweißt. Bei diesen bekannten Vorrichtungen stehen die Kühlbalken über den Mantel aus Kühlrohren bzw. über den Kesselmantel nach außen vor und stützen sich dort auf einem Auflager ab. Damit der Kessel für Reparatur- und/oder Wartungsarbeiten zugänglich ist, muss er gleichsam zweiteilig ausgeführt werden und dazu ist ein Kesselunterteil mit einem Kesseloberteil über ein aufwendiges Flanschpaar miteinander verbunden. Bei erforderlichen Reparatur- und/oder Wartungsarbeiten muss die Verbindung der Kesselteile im Bereich des Flanschpaares gelöst werden und das gesamte Kesseloberteil mit den zugehörigen Kühlrohren muss abgenommen werden. Die Verbindung zwischen Kesseloberteil und Kesselunterteil ist aufwendig und kostspielig und auch die erforderlichen Maßnahmen zur Durchführung von Reparatur- und/oder Wartungsarbeiten verursachen einen erheblichen Aufwand.

Demgegenüber liegt der Erfindung das technische Problem zugrunde eine Prozessgaskühlvorrichtung der eingangs genannten Art anzugeben, bei der Wartungs- und/oder Reparaturarbeiten im Kesselinnenraum bzw. an den Kühlrohren des Kessels problemlos und ohne großen Aufwand möglich sind.

Zur Lösung dieses technischen Problems lehrt die Erfindung eine Prozessgaskühlvorrichtung, insbesondere zur Kühlung von Prozessgasen in Salpetersäureanlagen und in Caprolactamanlagen,
wobei ein Kessel mit einem Mantel aus Kühlrohren vorgesehen ist und wobei am oberen Ende des Kessels eine Brennerhaube auf den Kessel aufgesetzt ist,
wobei unterhalb der Brennerhaube eine Katalysatoreinrichtung angeordnet ist, welche Katalysatoreinrichtung von einem Kühlbalkenaggregat abgestützt ist und wobei das Kühlbalkenaggregat lösbar mit dem Kessel verbunden ist.

Erfindungsgemäß ist also das Kühlbalkenaggregat von dem Kessel demontierbar bzw. abnehmbar. Es liegt im Rahmen der Erfindung, dass das Kühlbalkenaggregat schweißverbindungsfrei an den Kessel angeschlossen ist. Nach sehr bevorzugter Ausführungsform der Erfindung liegt das Kühlbalkenaggregat schweißverbindungsfrei auf der Wand des Kessels auf. Mit anderen Worten stützt die Wand des Kessels bei dieser Ausführungsform das Kühlbalkenaggregat schweißverbindungsfrei ab. Zur Durchführung von Reparatur- und/oder Wartungsarbeiten im Kessel wird zunächst die Brennerhaube der Vorrichtung entfernt, anschließend wird die Katalysatoreinrichtung von dem Kühlbalkenaggregat abgenommen und schließlich kann das Kühlbalkenaggregat ebenfalls von dem Kessel abgenommen werden, so dass der Kesselinnenraum von oben zugänglich ist. Es liegt also im Rahmen der Erfindung, dass die genannten Komponenten, nämlich Brennerhaube, Katalysatoreinrichtung und Kühlbalkenaggregat sowie Kessel schweißverbindungsfrei miteinander verbunden bzw. aneinander angeschlossen sind.

Der am Kessel vorgesehene Mantel aus Kühlrohren läuft zweckmäßigerweise über den gesamten Umfang des Kessels um. Durch die Kühlrohre wird vorzugsweise Wasserdampf als Kühlmedium geleitet. In der Regel weist der Kessel einen kreisförmigen Querschnitt oder einen im Wesentlichen kreisförmigen Querschnitt auf.

Es liegt im Rahmen der Erfindung, dass die Katalysatoreinrichtung aus einem Katalysatornetz und aus einer Netzeinspannvorrichtung besteht und dass die Netzeinspannvorrichtung auf dem Kühlbalkenaggregat aufliegt. Mit dem Katalysatornetz wird vorzugsweise die Oxydation von Ammoniak zu Stickstoffmonoxid katalysiert. Dass die Netzeinspannrichtung auf dem Kühlbalkenaggregat aufliegt, meint auch eine Ausführungsform der Erfindung, bei der auf dem Kühlbalkenaggregat eine Kühlschnecke aufliegt und wobei die Netzeinspannvorrichtung auf dieser Kühlschnecke liegt. Mit anderen Worten kann also zwischen Netzeinspannrichtung und Kühlbalkenaggregat eine Kühlschnecke zwischengeschaltet sein.

Das Kühlbalkenaggregat weist eine Mehrzahl von Kühlbalken auf, die sich quer durch die Vorrichtung bzw. quer durch den Kessel erstrecken. Dabei sind in vertikaler Richtung zwischen den Kühlbalken breite Durchgangskanäle für das Prozessgas vorhanden. Es liegt im Rahmen der Erfindung, dass die Kühlbalken des Kühlbalkenaggregates eine horizontale Auflageebene für die Katalysatoreinrichtung bzw. für die Netzeinspannvorrichtung bilden. Es wurde oben bereits darauf hingewiesen, dass eine Kühlschnecke auf der horizontalen Auflageebene des Kühlbalkenaggregates aufliegen kann, die zwischen Netzeinspannvorrichtung und Kühlbalkenaggregat geschaltet ist. Die Kühlschnecke weist dann wiederum eine horizontale Auflagefläche für die Netzeinspannvorrichtung auf.

Es liegt fernerhin im Rahmen der Erfindung, dass das Kühlbalkenaggregat einen Kühlrohrmantel aufweist. Der Kühlrohrmantel läuft zweckmäßigerweise über den Umfang des Kühlbalkenaggregates um bzw. bezüglich des Umfangs des Kessels um. Dieser Kühlrohrmantel des Kühlbalkenaggregates bildet also gleichsam die Fortsetzung des Kesselmantels aus Kühlrohren im Bereich zwischen Kessel und Brennerhaube. Vorzugsweise schließt also der Kühlrohrmantel des Kühlbalkenaggregates an den Mantel aus Kühlrohren des Kessels an. Durch die Kühlrohre des Kühlrohrmantels wird ein Kühlmedium geleitet, bei dem es sich vorzugsweise um ein Wasser/Dampf-Gemisch handelt. Im Übrigen wird auch durch die Kühlbalken ein Kühlmedium geführt, das ebenfalls vorzugsweise ein Wasser/Dampf-Gemisch ist. Nach einer bevorzugten Ausführungsform der Erfindung ist der Kühlkreislauf des Mantels aus Kühlrohren am Kessel von dem Kühlkreislauf des Kühlrohrmantels des Kühlbalkenaggregates getrennt. Vorzugsweise ist auch der Kühlkreislauf der Kühlbalken von dem Kühlkreislauf des Mantels aus Kühlrohren am Kessel getrennt. - Mit dem Begriff Kühlkreislauf ist hier und nachfolgend auch ein Kühlkreislauf gemeint, der sich aus separaten Teilkühlkreisläufen zusammensetzt.

Es liegt im Rahmen der Erfindung, dass die Kühlbalken des Kohlbalkenaggregates im Wesentlichen innerhalb des Kühlrohrmantels des Kühlbalkenaggregates angeordnet sind. Mit anderen Worten werden die Kühlbalken des Kühlbalkenaggregates von dem Kühlrohrmantel umgeben und ragen vorzugsweise nicht oder kaum über den Kühlrohrmantel nach außen hervor.

Eine besonders bevorzugte Ausführungsform der Erfindung ist dadurch gekennzeichnet, dass die Enden zumindest eines Teils der Kühlbalken mit den Kühlrohren des Kühlrohrmantels fest verbunden, vorzugsweise verschweißt sind.

Mit anderen Worten sind die Enden dieser Kühlbalken bevorzugt über Schweißverbindungen mit dem Kühlrohrmantel verbunden. Es kann aber auch Kühlbalken bzw. Kühlbalkenabschnitte geben, die zwei oder mehr andere Kühlbalken miteinander verbinden und somit nicht direkt mit dem Kühlrohrmantel Kontakt haben.

Es liegt im Rahmen der Erfindung, dass mehrere Kühlbalkenebenen in dem Kühlbalkenaggregat übereinander angeordnet sind. Eine Kühlbalkenebene wird dabei von mehreren sich kreuzenden Kühlbalken aufgespannt. Zweckmäßigerweise sind Kühlbalken der übereinander angeordneten Kühlbalkenebenen in vertikaler Richtung gleichsam fluchtend angeordnet, so dass ihre Seitenflächen sich zu vertikalen Kühlbalkenflächen ergänzen. Auf diese Weise bleiben zwischen den Kühlbalken bzw. den vertikalen Kühlbalkenflächen ausreichend breite bzw. voluminöse Durchgangskanäle für das Prozessgas frei.

Vorzugsweise kreuzen sich in einer Kühlbalkenebene zumindest zwei Kühlbalken. Nach einer sehr bevorzugten Ausführungsform der Erfindung erstrecken sich in einer Kühlbalkenebene zumindest zwei parallele erste Kühlbatken durch den Innenraum der Vorrichtung und in dieser Kühlbalkenebene sind zumindest zwei parallele zweite Kühlbalken vorgesehen, die die ersten Kühlbalken kreuzen. Parallel meint hier auch im Wesentlichen parallel. Vorzugsweise sind die zweiten Kühlbalken senkrecht bzw. im Wesentlichen senkrecht zu den ersten Kühlbalken angeordnet.

Der Erfindung liegt die Erkenntnis zugrunde, dass aufgrund der erfindungsgemäßen Ausgestaltung der Prozessgaskühlvorrichtung die aus dem Stand der Technik bekannten Nachteile effektiv vermieden werden können. Dadurch, dass das Kühlbalkenaggregat problemlos von dem Kessel demontierbar ist, ergibt sich eine leichte Zugänglichkeit des Kesselinnenraumes für Reparatur- und Wartungsarbeiten. Insbesondere sind die Kühlrohre des Kessels zugänglich für solche Arbeiten. Im Vergleich zu der aus dem Stand der Technik bekannten Prozessgaskühlvorrichtung wird die eingangs beschriebene aufwendige Teilung des Kessels bzw. eine aufwendige und kostspielige Flanschverbindung von Kesselteilen vermieden. Die Zugänglichkeit des Kesselinnenraumes lässt sich auf einfache und wenig aufwendige Weise erreichen. Trotz der erfindungsgemäßen lösbaren Verbindung zwischen Kühlbalkenaggregat und Kessel weist die Prozessgaskühlvorrichtung eine hervorragende Gasdichtigkeit auf. Bei den aus der Praxis bekannten Vorrichtungen stützen sich - wie eingangs bereits angesprochen - die unteren Kühlbalken des Kühlbalkenaggregates außerhalb des Vorrichtungsmantels bzw. außerhalb des Kesselmantels auf einem Auflager ab. Um zwischen diesen unteren abgestützten Kühlbalken und der Katalysatoreinrichtung die notwendige Höhe zu überbrücken, sind bei der bekannten Vorrichtung eine relative große Anzahl von Kühlbalken übereinander angeordnet. Bei der erfindungsgemäßen Vorrichtung sind aufgrund der Integration der Kühlbalken in den Kühlrohrmantel des Kühlbalkenaggregates weniger Kühlbalken bzw. weniger Kühlbalkenebenen erforderlich, so dass das Kühlbalkenaggregat im Vergleich zu dem aus dem Stand der Technik bekannten Kühlbatkenaggregafi eine geringere Höhe hat. Auch dadurch ergibt sich eine vorteilhafte Aufwandverringerung. Im Übrigen ist noch darauf hinzuweisen, dass die erfindungsgemäße Prozessgaskühlvorrichtung auf einfache und kostengünstige Weise herstellbar ist.

Nachfolgend wird die Erfindung anhand einer lediglich ein Ausführungsbeispiel darstellenden Zeichnung näher erläutert. Es zeigen in schematischer Darstellung:
- Fig. 1: eine Seitenansicht einer erfindungsgemäßen Vorrichtung im Schnitt,
- Fig. 2: einen vergrößerten Ausschnitt aus Fig. 1 und

- Fig. 3: eine Draufsicht auf den Gegenstand gemäß Fig. 1 im Schnitt.

Die Figuren zeigen eine erfindungsgemäße Prozessgaskühlvorrichtung, die insbesondere zur Kühlung von Prozessgasen in Salpetersäureanlagen oder in Caprolactamanlagen geeignet ist. Es ist ein Kessel 1 mit einem Mantel 2 aus Kühlrohren 3 vorgesehen. Am oberen Ende des Kessels 1 ist eine Brennerhaube 4 auf den Kessel aufgesetzt. Unterhalb der Brennerhaube 4 ist eine Katalysatoreinrichtung 5 angeordnet, die aus einem Katalysatornetz 6 und einer Netzeinspannvorrichtung 7 besteht. Die Katalysatoreinrichtung 5 bzw. die Netzeinspannvorrichtung 7 der Katalysatoreinrichtung 5 wird von einem Kühlbalkenaggregat 8 abgestützt. Erfindungsgemäß ist das Kühlbalkenaggregat 8 lösbar an den Kessel 1 angeschlossen. Mit anderen Worten ist das Kühlbalkenaggregat 8 von dem Kessel 1 demontierbar. Dazu stützt sich das Kühlbalkenaggregat 8 im Ausführungsbeispiel schweißverbindungsfrei auf der Wand 9 des Kessels 1 ab. Mit anderen Worten liegt das Kühlbalkenaggregat 8 vorzugsweise schweißverbindungsfrei auf der Wand 9 des Kessels 1 auf bzw. auf einem Auflager dieser Wand 9 auf.

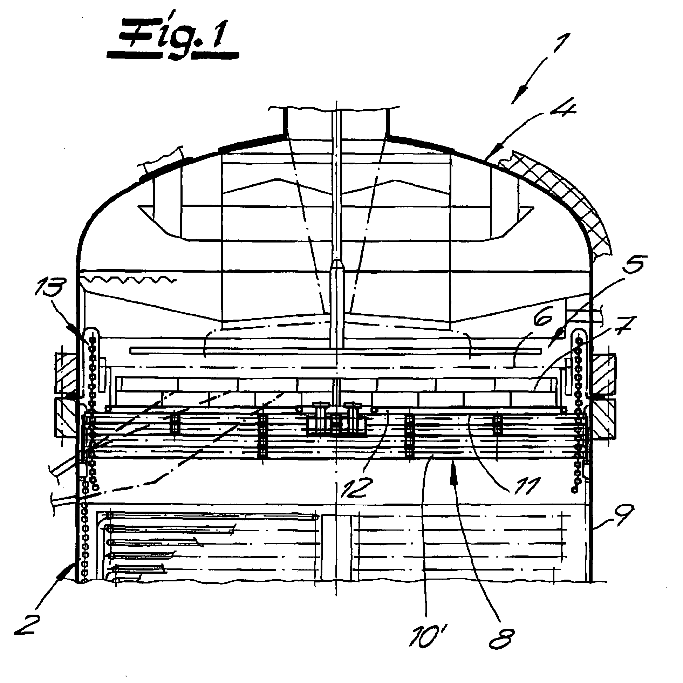

Insbesondere in der Fig. 1 ist erkennbar, dass die Kühlbalken 10 des Kühlbalkenaggregates 8 eine horizontale Auflageebene 11 für die Katalysatoreinrichtung 5 bilden. Im Ausführungsbeispiel liegt auf der horizontalen Auflageebene 11 eine Kühlschnecke 12 auf, auf der wiederum die Netzeinspannvorrichtung 7 der Katalysatoreinrichtung 5 liegt. Die Kühlschnecke 12 stellt hier also eine horizontale Auflagefläche für die Netzeinspannvorrichtung 7 zur Verfügung. Die Kühlschnecke 12 ist also der horizontalen Auflageebene 11 des Kühlbalkenaggregates 8 und der Netzeinspannvorrichtung 7 zwischengeschaltet.

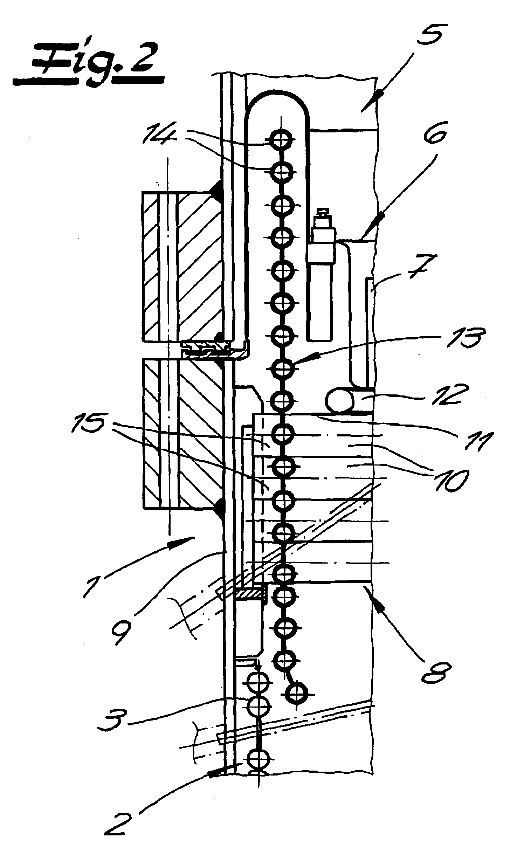

Vor allem in den Fig. 1 und 2 ist dargestellt, dass das erfindungsgemäße Kühlbalkenaggregat 8 einen Kühlrohrmantel 13 aufweist. Dieser Kühlrohrmantel 13 läuft zweckmäßigerweise über den Umfang des Kühlbalkenaggregates 8 bzw. über den Umfang des Kessels 1 um. Durch die Kühlrohre 14 dieses Kühlrohrmantels 13 wird zweckmäßigerweise Wasserdampf als Kühlmedium geleitet. Es wurde oben bereits darauf hingewiesen, dass ein Kühlmedium, vorzugsweise ebenfalls ein Wasser/Dampf-Gemisch auch durch die Kühlbalken 10 geführt wird. In der Fig. 1 ist gezeigt, dass der Kühlrohrmantel 13 des Kühlbalkenaggregates 8 an den Mantel 2 aus Kühlrohren 3 des Kessels 1 anschließt und gleichsam nach oben hin die Fortsetzung dieses Mantels 2 des Kessels 1 bildet. Der Kühlrohrmantel 13 ist dabei nicht fest mit dem Mantel 2 verbunden, sondern lösbar von dem Mantel 2 ausgeführt.

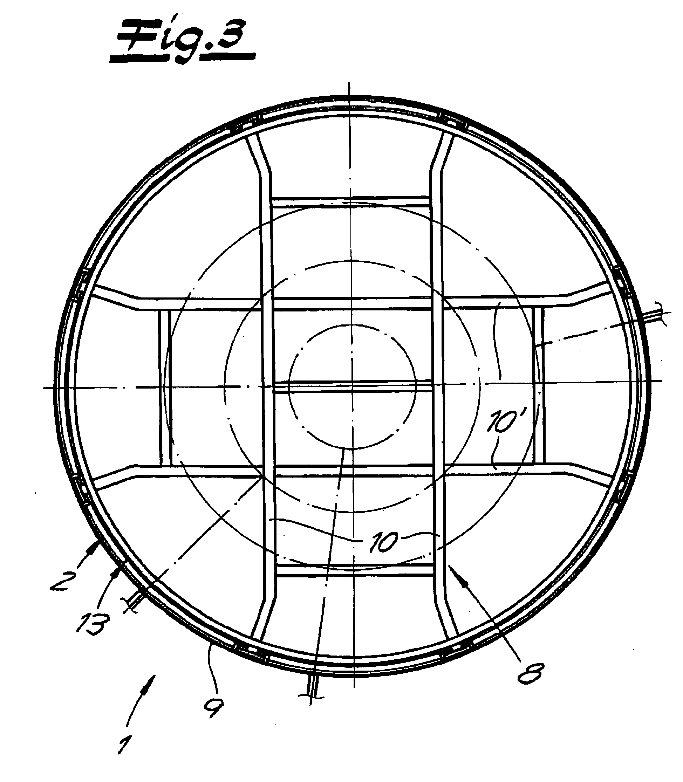

Der Fig. 3 ist entnehmbar, dass die Kühlbalken 10 des Kühlbalkenaggregates 8 im Wesentlichen innerhalb des Kühlrohrmantels 13 des Kühlbalkenaggregates 8 angeordnet sind. Mit anderen Worten ragen die Kühlbalken 10 des Kühlbalkenaggregates 8 nicht oder kann über den Kühlrohrmantel 13 hinaus und enden somit an dem Kühlrohrmantel 13. Nach besonders bevorzugter Ausführungsform der Erfindung und im Ausführungsbeispiel sind dabei die an den Kühlrohrmantel 13 anschließenden Enden 15 der Kühlbalken 10 mit den Kühlrohren 14 des Kühlrohrmantels 13 verschweißt.

Die Fig. 1 zeigt im Übrigen, dass mehrere Kühlbalkenebenen übereinander angeordnet sind und zwar im Ausführungsbeispiel vier Kühlbalkenebenen. Dabei sind zweckmäßigerweise Kühlbalken 10 in vertikaler Richtung gleichsam fluchtend übereinander angeordnet, so dass die Seitenflächen der Kühlbalken senkrechte Kühlbalkenflächen bilden. Auf diese Weise verbleiben zwischen den Kühlbalken 10 ausreichend breite Durchlasskanäle für das Prozessgas.

Die Fig. 3 zeigt, dass sich in einer Kühlbalkenebene vorzugsweise zwei parallele erste Kühlbalken 10 durch den Innenraum der Vorrichtung erstrecken und dass in dieser Kühlbalkenebene weiterhin zwei parallele zweite Kühlbalken 10' vorgesehen sind, die die ersten Kühlbalken 10 kreuzen bzw. die senkrecht zu den ersten Kühlbalken 10 angeordnet sind. Vorzugsweise und im Ausführungsbeispiel sind die Enden 15 der Kühlbalken 10, 10' abgewinkelt ausgebildet und diese abgewinkelten Enden 15 sind mit der Wand des Kühlbalkenaggregates 8 verbunden bzw. mit Kühlrohren 14 des Kühlrohrmantels 13 des Kühlbalkenaggregates 8 verschweißt.

Die Brennerhaube 4 ist lösbar an den Kessel 1 angeschlossen und ist somit von dem Kessel 1 abnehmbar (Fig. 1 und 2). Außerdem kann dann die Katalysatoreinrichtung 5 aus der Vorrichtung entfernt werden, da sie ebenfalls lösbar an die Vorrichtung angeschlossen ist bzw. vorzugsweise auf dem Kühlbalkenaggregat 8 lediglich aufliegt. Anschließend kann dann auch das Kühlbalkenaggregat 8 von der Vorrichtung bzw. von dem Kessel 1 entfernt werden, da das Kühlbalkenaggregat 8 erfindungsgemäß lösbar an den Kessel 1 angeschlossen ist. Auf diese Weise wird der Innenraum des Kessels 1 für Reparatur- und Wartungsarbeiten zugänglich, beispielsweise für die Reparatur oder den Austausch von Kühlrohren 3 des Mantels 2.

## Patentansprüche

1. Prozessgaskühlvorrichtung, insbesondere zur Kühlung von Prozessgasen in Salpetersäureanlagen oder in Caprolactamanlagen,
wobei ein Kessel (1) mit einem Mantel (2) aus Kühlrohren (3) vorgesehen ist und wobei am oberen Ende des Kessels (1) eine Brennerhaube (4) auf den Kessel (1) aufgesetzt ist,
wobei unterhalb der Brennerhaube (4) eine Katalysatoreinrichtung (5) angeordnet ist, welche Katalysatoreinrichtung (5) von einem Kühlbalkenaggregat (8) abgestützt ist und wobei das Kühlbalkenaggregat (8) lösbar mit dem Kessel (1) verbunden ist.

2. Prozessgaskühlvorrichtung nach Anspruch 1, wobei das Kühlbalkenaggregat (8) schweißverbindungsfrei auf der Wand (9) des Kessels (1) aufliegt.

3. Prozessgaskühlvorrichtung nach einem der Ansprüche 1 oder 2, wobei die Katalysatoreinrichtung (5) aus einem Katalysatornetz (6) und aus einer Netzeinspannvorrichtung (7) besteht und wobei die Netzeinspannvorrichtung (7) auf dem Kühlbalkenaggregat (8) aufliegt.

4. Prozessgaskühlvorrichtung nach einem der Ansprüche 1 bis 3, wobei Kühlbalken (10, 10') des Kühlbalkenaggregates (8) eine horizontale Auflageebene (11) für die Katalysatoreinrichtung (5) bilden.

5. Prozessgaskühlvorrichtung nach einem der Ansprüche 1 bis 4, wobei das Kühlbalkenaggregat (8) einen Kühlrohrmantel (13) aufweist.

6. Prozessgaskühlvorrichtung nach Anspruch 5, wobei die Kühlbalken (10, 10') des Kühlbalkenaggregates (8) ausschließlich innerhalb des Kühlrohrmantels (13) des Kühlbalkenaggregates (8) angeordnet sind.

7. Prozessgaskühlvorüchtung nach einem der Ansprüche 5 oder 6, wobei die Enden (15) der Kühlbalken (10, 10') mit den Kühlrohren (14) des Kühlrohrmantels (13) verbunden sind, vorzugsweise verschweißt sind.

8. Prozessgaskühlvorrichtung nach einem der Ansprüche 1 bis 7, wobei mehrere Kühlbalkenebenen in dem Kühlbalkenaggregat (8) übereinander angeordnet sind.

9. Prozessgaskühlvorrichtung nach einem der Ansprüche 1 bis 8, wobei sich in einer ersten Kühlbalkenebene zumindest zwei erste Kühlbalken (10) durch die Vorrichtung erstrecken und wobei in dieser Kühlbalkenebene zumindest zwei zweite Kühlbalken (10') vorgesehen sind, die die ersten Kühlbalken (10) kreuzen.
